# EUROPEAN PATENT APPLICATION

(11) **EP 1 329 836 A2**
(43) Date of publication of application: **23.07.2003**
(21) Application number: 02024218.6
(22) Date of filing: 31.10.2002
(51) Int. Cl.: G06K 7/00, G06K 19/077, G07F 7/10, G07C 9/00, B42D 15/10

(54) **Passport counterfeit detection system**

(30) Priority: 22.01.2002 JP 2002012564
(71) Applicant: Hitachi Electronics Services Co., Ltd., Kanagawa-ken 244 (JP)
(72) Inventor: Takesada, Mutsuharu, Totsuka-ku, Yokohama-shi, Kanagawa 224 (JP); Yamagishi, Norikazu, Totsuka-ku, Yokohama-shi, Kanagawa 224 (JP); Habara, Takaaki, Totsuka-ku, Yokohama-shi, Kanagawa 224 (JP); Imai, Mina, Totsuka-ku, Yokohama-shi, Kanagawa 224 (JP)
(74) Representative: Steinmeister, Helmut

(57) **Abstract**

A passport counterfeit detection system comprises an ID chip reader 5 for reading the personal identification data stored in an ID chip 4 embedded in a passport body 2 of a passport 1, and a display 7 of a personal computer 6 for displaying the personal identification data stored in the ID chip 4. The ID chip reader 5 is used to read out the personal identification data stored in the ID chip 4. The personal identification data read out from the ID chip 4 is displayed on a screen 7a of the display 7.

## Description

### FIELD OF THE INVENTION

The present invention relates to a passport counterfeit detection system for detecting the forgery of a passport having embedded therein an ID chip storing various personal identification data for identifying an individual.

### DESCRIPTION OF THE RELATED ART

In general, a passport is a document that certifies the identity and the nationality of the passport holder who is traveling to a foreign country or returning therefrom, and it further asks for protection of and requests for availability of facilities for the passport holder in a foreign country.

Those not in possession of a passport issued by the foreign minister or consul are prohibited from departing from a country or entering another country.

The conventional passport merely contains the passport owner's personal information, passport information, and a photograph and the like printed on the passport body for identifying the passport owner.

Japanese Patent Laid-Open Publication No. 11-198573 discloses a face photograph verification system which prevents the fraudulent use or forgery of the photograph on a passport, an identification card or the like.

Recently, however, the forging of passports have become cleverer, and in the case of Japan, the number of foreigners attempting to enter the country using cunningly forged passports has increased rapidly. Along with such trend, the number of crimes caused by illegal aliens residing within the country has also increased.

Currently, when a traveler travels to or returns from a foreign country, the traveler presents his/her passport at the embarkation/disembarkation check gate at the airport. The officer at the embarkation/disembarkation check gate simply visually confirms the information printed on the passport such as the personal information, the passport information and the photograph for identification, and judges whether the passport is a counterfeit passport or not. Accordingly, the check for forged passports performed by the officer at the check gate for maintaining security is not sufficient, and it is difficult for officers to clamp down on illegal immigrants etc. at the embarkation/disembarkation check gate of the airport.

Moreover, the face photograph verification system disclosed in Japanese Patent Laid-Open Publication No. 11-198573 teaches providing to a passport or identification card with a face photograph a two-dimensional bar code representing the face photograph data, recreating the photograph data through a bar code reader, and comparing the face photograph shown on the screen and the face photograph printed on the passport or card for verification.

### SUMMARY OF THE INVENTION

The object of the present invention is to provide a passport counterfeit detection system, wherein various personal identification data for identifying the passport owner are recorded in a particle-like micro ID chip embedded in a passport body of a passport, and the personal identification data of the passport owner stored in the ID chip are read using a dedicated ID chip reader and displayed on a screen. According to the present invention, the officer at the check gate of an international airport can visually verify the personal identification data displayed on the screen to confirm that the passport holder is actually the passport owner. Moreover, the officer can determine whether the passport is counterfeited or not based on the personal identification data of the passport owner read out from the ID chip and displayed on the screen, thus improving the quality of the check performed on counterfeit passports at the embarkation/disembarkation check gate, thereby ensuring security. Therefore, according to the present passport counterfeit detection system, officers can clamp down on illegal immigrants etc. at the check gate of the airport.

The passport counterfeit detection system according to the present invention for detecting the counterfeit of a passport with an ID chip comprises a passport body certifying the identity and nationality of a passport holder entering and departing a foreign country, having an identification photograph printed on said passport body for verifying the passport owner, the passport counterfeit detection system comprising an ID chip reader for reading out personal identification data stored in a particle-like micro ID chip embedded in the passport body, and a display device for displaying said personal identification data read out from said ID chip by the ID chip reader.

According to the passport counterfeit detection system of the present invention, the personal identification data stored in said ID chip are comparable with the personal information and passport information printed on the passport body, which include the passport owner's nationality, name, sex, registered domicile, date of birth, height, current address, contact address, hair color, eye color, supplementary information, issue date of passport, expiration date of passport, and passport number.

According to the passport counterfeit detection system of the present invention, the personal identification data stored in the ID chip include facial photograph data of the passport owner comparable with the identification photograph printed on the passport body.

According to the passport counterfeit detection system of the present invention, the personal identification data stored in the ID chip include a full-length photograph data of the passport owner comparable with the whole figure of the passport holder.

According to the passport counterfeit detection system of the present invention, the ID chip reader is capable of reading out personal identification data from the ID chip embedded in the passport body without coming into contact with said chip.

### BRIEF DESCRIPTION OF THE DRAWINGS

FIG. 1 is a view showing the passport counterfeit detection system according to the preferred embodiment of the present invention;
FIG. 2 is a perspective view showing the passport with an ID chip utilized in the passport counterfeit detection system of the present invention;
FIG. 3 is a front view showing the passport with an ID chip utilized in the passport counterfeit detection system of the present invention in opened state;
FIG. 4 is a view showing the procedure of applying for a passport with an ID chip;
FIG. 5 is a view showing the state in which the facial photograph data of the passport owner read out from the ID chip using an ID chip reader is displayed on a screen of a display device; and
FIG. 6 is a view showing the state in which a counterfeit passport is detected according to the passport counterfeit detection system of the present invention.

### DETAILED DESCRIPTION OF THE PREFERRED EMBODIMENT

We will now explain in detail the preferred embodiments of the present invention with reference to the accompanied drawings.

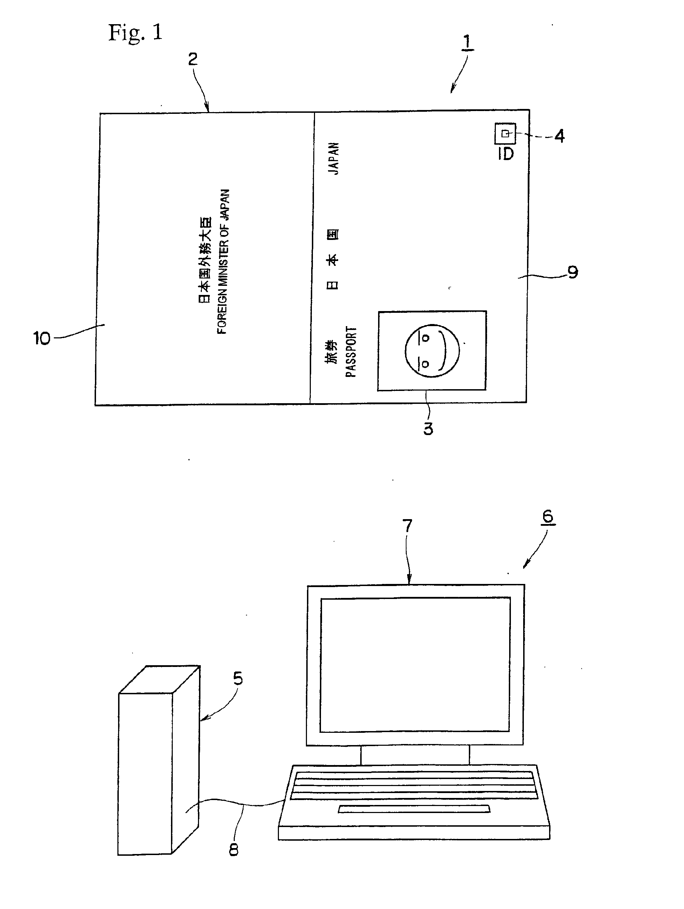

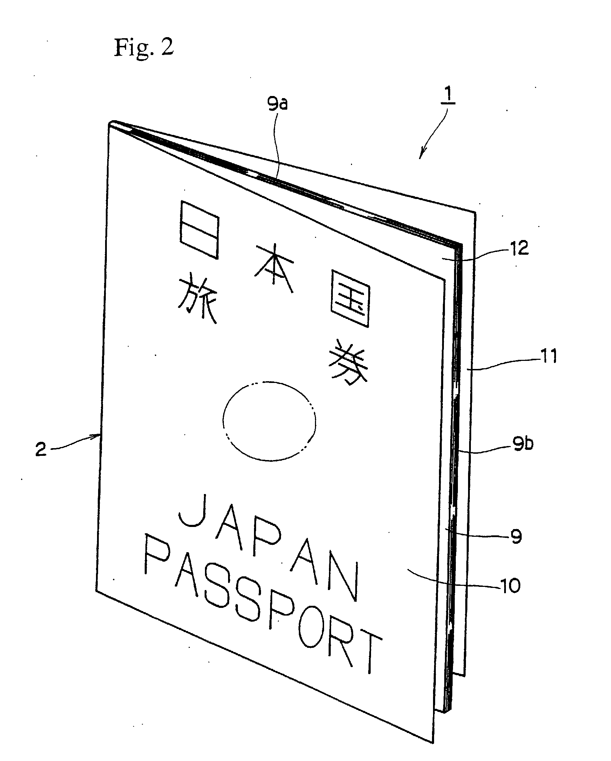

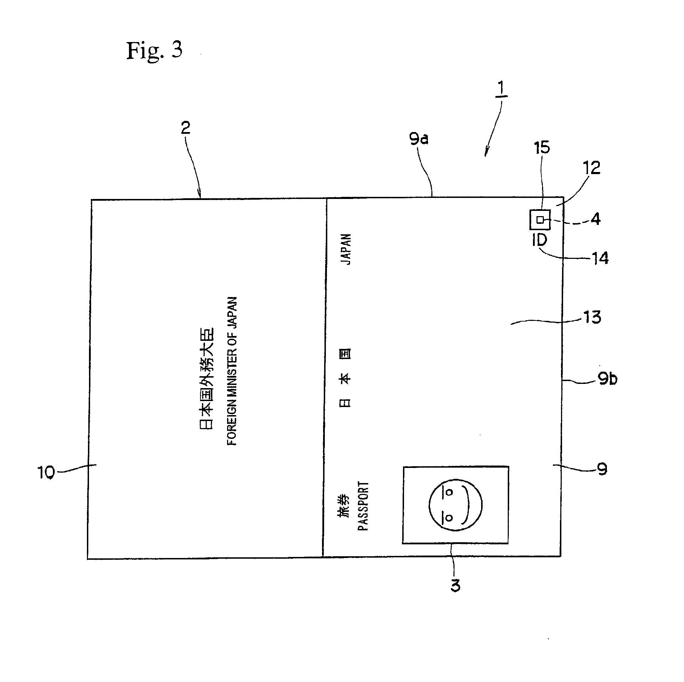

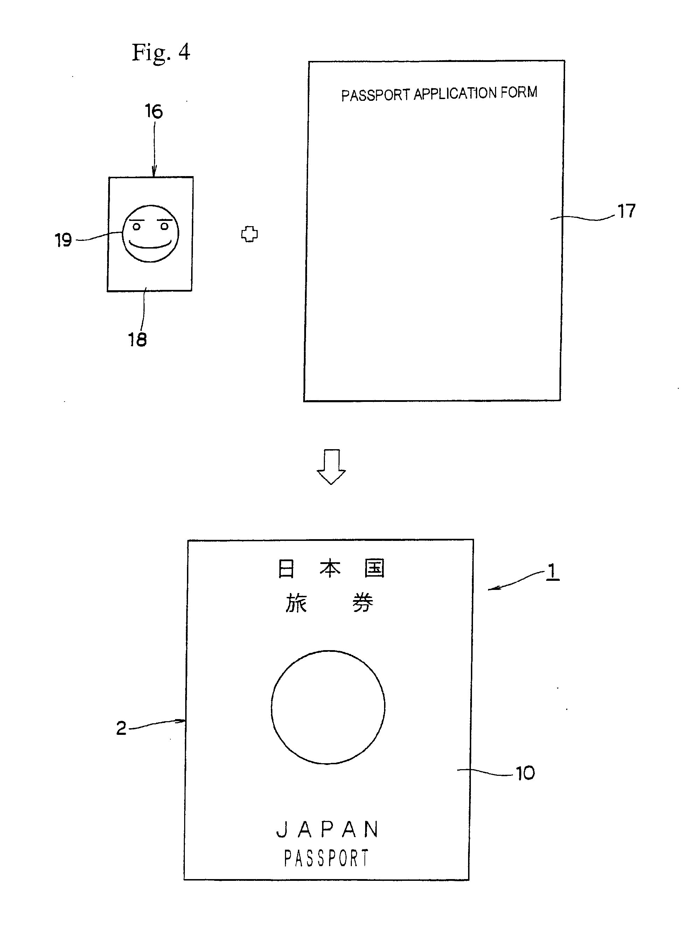

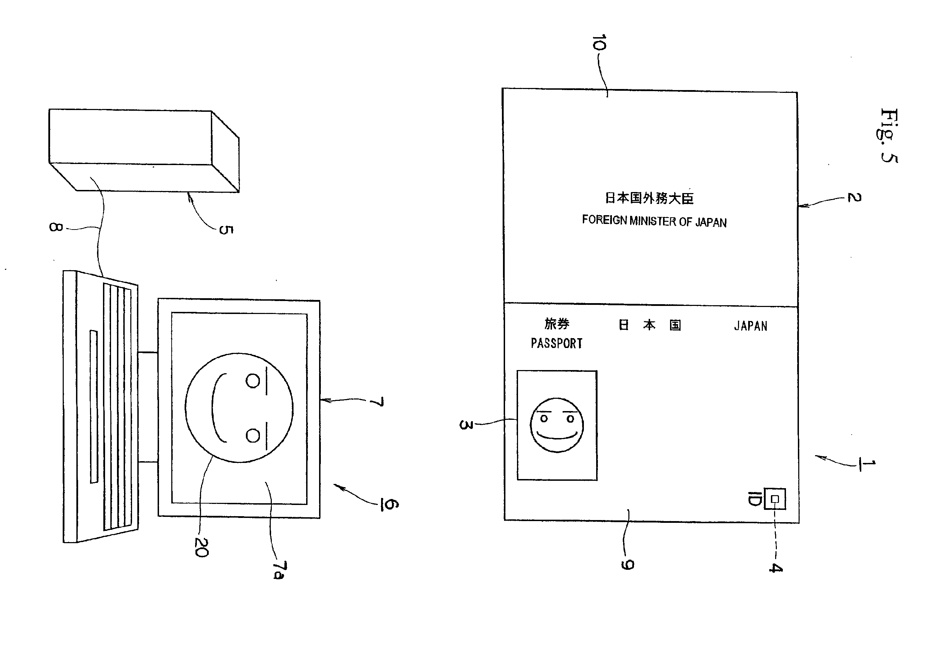

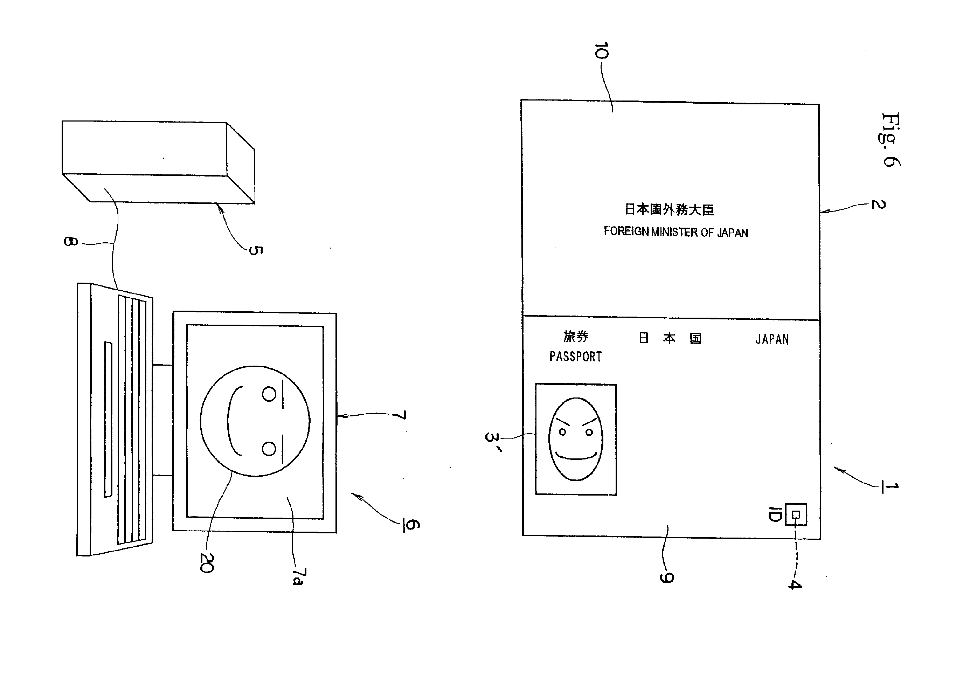

FIG. 1 illustrates the passport counterfeit detection system according to a preferred embodiment of the present invention, FIG. 2 is a perspective view showing the passport with an ID chip used in the passport counterfeit detection system according to the embodiment of the present invention, FIG. 3 is a front view showing the passport with an ID chip used in the passport counterfeit detection system according to the embodiment of the present invention in opened state, FIG. 4 is a view showing the issuance of a passport with an ID chip according to the passport application procedure, FIG. 5 is a view showing the state in which the facial photograph data of the passport owner read out from the ID chip using an ID chip reader is displayed on a screen of the display device, and FIG. 6 shows the state where a counterfeit passport is detected according to the passport counterfeit detection system according to the embodiment of the present invention.

The passport counterfeit detection system according to the present invention detects the forgery of a passport 1 with an ID chip comprising a passport body 2 having printed thereto an identification facial photograph 3, personal information and passport information for verifying the identity and nationality of a passport holder traveling to or departing from a foreign country. As shown in FIG. 1, a particle-like micro ID chip 4 is embedded in the passport body 2.

As illustrated in FIG. 1, the passport counterfeit detection system of the present invention is equipped with an ID chip reader 5 for reading out personal identification data stored in the particle-like ID chip 4 embedded in the passport body 2 of the passport 1, and a display 7 of a personal computer (PC) 6 for displaying the personal identification data read out from the ID chip 4 using an ID chip reader 5.

As shown in FIG. 1, the ID chip reader 5 and the personal computer 6 are electrically connected via a cable 8.

As shown in FIG. 2, the passport body 2 of the passport 1 is composed of plural sheets of paper 9 of the same size, a front cover 10 and a back cover 11, which are bound together into a booklet form.

On the sheet of paper 9 constituting the page on which the identification photograph 3 of the passport owner is printed in the passport body 2 of passport 1 is embedded one ID chip 4 disposed at a corner portion 12 where the upper rim 9a and one side rim 9b meet.

The ID chip 4 embedded in the passport body 2 of the passport with an anti-counterfeit ID chip 1 stores personal data and passport data printed on the passport body 2 such as the passport owner's nationality, name, sex, registered domicile, date of birth, height, current address, contact address, hair color, eye color, supplementary information, issue date of passport, expiration date of passport, and passport number as the personal identification data for identifying the passport owner.

As shown in FIG. 3, on one side 13 of the sheet of paper 9 constituting the page on which the identification photograph 3 is printed disposed between the front cover 10 and the back cover 11 of the passport body 2 is printed a mark 14 indicating that an ID chip 4 is embedded therein.

Moreover, as shown in FIG. 3, on one side 13 of the sheet of paper 9 constituting the page on which the identification photograph 3 is printed disposed between the front and back covers 10, 11 of the passport body 2 is printed a mark 15 indicating where the ID chip is embedded.

By simply bringing the ID chip reader 5 close to the ID chip 4 embedded in the passport body 2, the personal identification data stored in the ID chip 4 for identifying the passport owner can be read out.

The ID chip 4 embedded in the passport body 2 is composed of a particle-like micro IC (integrated circuit) chip, the micro IC chip capable of storing a number having 38 digits at maximum.

The size of the ID chip 4 is 0.4 × 0.4 mm square with a thickness of 0.06 mm. Even if the passport 1 is bent, the embedded ID chip will not be damaged. The ID chip is equipped with a 128-bit ROM (read only memory).

According to the passport counterfeit detection system of the present invention, the personal identification data recorded in the ID chip 4 is the facial photograph information of the passport owner that is comparable with the identification facial photograph 3 printed on the passport body 2.

According yet to the passport counterfeit detection system of the present invention, the personal identification data recorded in the ID chip 4 is the full-length photograph data of the passport owner that is comparable with the whole body of the passport holder.

According to the passport counterfeit detection system of the present invention, the ID chip reader 5 is capable of reading out personal identification data from the ID chip 4 embedded in the passport body 2 without coming into contact therewith.

Next, the operation of the passport counterfeit detection system according to the present invention will be explained.

First, the applicant of a passport prepares required documents etc. such as an identification photograph 16, a passport issuance application 17, a copy of the family register (not shown) and a certificate of residence (not shown), and goes to the passport division of the local government organization of which the applicant is registered as resident. There, the applicant follows the procedure for applying for a passport.

The staff at the passport division records the personal identification data for identifying the passport applicant (=passport owner) such as the passport applicant' s nationality, name, sex, registered domicile, date of birth, height, current address, contact address, hair color, eye color, supplementary information, issue date of passport, expiration date of passport, and passport number to the ID chip 4 embedded in the passport body. Moreover, the staff scans the facial photograph image 19 of the passport applicant using a scanner functioning as an image input unit (not shown), and stores the facial photograph data of the passport applicant as personal identification data to the ID chip 4 embedded in the passport body 2 using an ID chip writer (not shown). Further, the officer stores a full-length photograph data of the passport applicant as the personal identification data to the ID chip 4 in a similar manner. Then, as shown in FIG. 4, the passport comprising a passport body 2 having printed thereto the personal information, the passport information and the identification facial photograph 3 identifying the passport owner is issued and provided to the passport applicant.

A traveler traveling to a foreign country goes to an international airport from which his/her flight departs, taking with him/her the passport 1 with the ID chip and presenting the passport at the embarkation/disembarkation check gate of the airport.

The officer at the check gate of the airport reads using a dedicated ID chip reader 5 the personal identification data for identifying the passport owner stored in the ID chip 4 embedded in a sheet of paper 5 of the page on which the identification photograph 2 is printed in the passport body 2, and displays the personal identification data on a screen 7a of a display device 7 of a personal computer 6 which functions as the display device of the present system. The personal identification data displayed on the screen can include the traveler' s nationality, name, sex, registered domicile, date of birth, height, current address, contact address, hair color, eye color, supplementary information, issue date of passport, expiration date of passport, passport number, the facial photograph data 20 of the passport owner shown in FIG. 5, and the full-length photograph data of the passport owner.

The officer at the check gate of the airport visually checks the personal information and the passport information printed on the passport body 2 against the personal identification information read from the ID chip 4 and displayed on the screen of the display device 7 of the personal computer 6, which include the traveler's nationality, name, sex, registered domicile, date of birth, height, current address, contact address, hair color, eye color, supplementary information, issue date of passport, expiration date of passport, and passport number, and thereby confirms that the passport applicant (passport owner) and the passport holder are actually the same person. Thus, the officer can judge whether the passport is a forged passport or not by checking the personal data and the passport data printed on the passport body against the various data stored in the ID chip 4 displayed on the screen, enabling forged passports to be securely checked at the check gate of the airport to ensure improved security, and enabling illegal immigrants etc. to be cracked down on at the check gate.

Moreover, as shown in FIG. 5, the officer at the check gate of the airport can visually compare the identification facial photograph 3 printed on the passport body 2 with the facial photograph data 20 of the passport owner being recorded in the ID chip 4 as personal identification data and displayed on the screen, thereby confirming that the passport owner and the passport holder are actually the same person, and by comparing the identification photograph 3 printed on the passport body 2 and the photograph data 20 of the passport owner stored in the ID chip 4 and displayed on the screen 7a, the officer can determine whether the passport is counterfeited or not.

As shown in FIG. 5, the officer at the check gate can confirm that the passport holder is actually the passport owner and that the passport 1 is not a counterfeit passport when the identification photograph 3 printed on the passport body 2 corresponds to the identification photograph data 20 of the passport owner stored in the ID chip 4 as personal identification data and displayed on the screen 7a of the display 7.

Further, with reference to FIG. 6, if the identification photograph 3' printed on the passport body 2 differs from the facial photograph data 20 of the passport owner stored in the ID chip 4 as personal identification data and displayed on the screen 7a of the display 7, the officer at the check gate determines that the passport holder is not the true passport owner, and judges that passport 1 has been counterfeited.

Moreover, the officer at the check gate visually compares the entire figure of the passport holder with the full-length photograph data of the passport owner stored in the ID chip 4 as personal identification data and displayed on the screen 7a of the display 7, thereby confirming whether or not the passport holder is actually the passport owner. Thus, according to the present invention, whether a passport has been counterfeited or not can be determined by comparing the whole figure of the passport holder with the full-length photograph data of the passport owner read out from the ID chip 4, so the check on counter feited passports can be performed accurately and securely at the check gate of the airport.

Though according to the above embodiment only one ID chip is embedded in the sheet of paper constituting the page on which the identification photograph of the passport owner is printed in the passport body of the passport with an ID chip, but the ID chip can be embedded in the front or back cover of the passport body or in the page other than the page with the identification photograph, and the number of ID chips embedded in one passport body can be more than one.

As explained, the passport counterfeit detection system according to the present invention comprises a particle-like micro ID chip embedded in a passport body, the ID chip capable of storing a personal identification data for identifying the passport owner. The personal identification data stored in the ID chip can be read using an ID chip reader and displayed on a screen of a display device, enabling the officer at the check gate of an airport to visually inspect the personal identification data stored in the ID chip and displayed on the screen in order to determined whether the passport holder is actually the passport owner or not, and to determined whether the passport is counterfeited or not. Thus, the present invention offers a system that allows officers at the check gate of an airport to strictly check on counterfeited passports and to clamp down on illegal entry or departure at the check gate.

According to the present passport counterfeit detection system, the ID chip embedded in the passport can store personal identification data that are comparable with the personal information and the passport information printed on the passport body, the personal identification data including the passport owner's nationality, name, sex, registered domicile, date of birth, height, current address, contact address, hair color, eye color, supplementary information, issue date of passport, expiration date of passport, and passport number. Therefore, by reading out such personal identification data stored in the ID chip using an ID chip reader and displaying them on the screen of a display device, the officer at the check gate of an airport can visually verify the personal identification data so as to confirm that the passport holder is actually the passport owner, and can further determine whether the passport is a counterfeit passport or not.

According even further to the present passport counterfeit detection system, the personal identification data stored in the ID chip includes the facial photograph data of the passport owner that is comparable with the identification photograph printed on the passport body. Therefore, by reading in the facial photograph data of the passport owner stored in the ID chip by an ID chip reader and displaying them on the screen of a display device, the officer at the check gate can visually compare the identification photograph printed on the passport body with the facial photograph data of the passport owner stored in the ID chip and displayed on the screen so as to confirm whether the passport holder is actually the passport owner or not, and can further determine whether the passport is counterfeited or not.

According further to the present passport counterfeit detection system, the personal identification data stored in the ID chip includes a full-length photograph data of the passport owner that is comparable with the whole figure of the passport holder. Therefore, by visually comparing the whole figure of the passport holder with the full-length photograph data stored in the ID chip and displayed on the screen of a display device, the officer at the check gate can confirm whether or not the passport holder is actually the passport owner, and can further determine whether the passport is counterfeited or not.

According to the passport counterfeit detection system of the present invention, the information stored in the ID chip can be read out and displayed on a screen of a display device by simply bringing an ID chip reader close to the ID chip.

## Claims

1. A passport counterfeit detection system for detecting the counterfeit of a passport with an ID chip comprising a passport body certifying the identity and nationality of a passport holder entering and departing a foreign country, having an identification photograph printed on said passport body for verifying the passport owner, the passport counterfeit detection system comprising:
an ID chip reader for reading out personal identification data stored in a particle-like micro ID chip embedded in the passport body; and
a display device for displaying said personal identification data read out from said ID chip by said ID chip reader.

2. A passport counterfeit detection system according to claim 1, wherein said personal identification data stored in said ID chip are comparable with the personal information and passport information printed on the passport body, which include the passport owner's nationality, name, sex, registered domicile, date of birth, height, current address, contact address, hair color, eye color, supplementary information, issue date of passport, expiration date of passport, and passport number.

3. A passport counterfeit detection system according to claim 1, wherein the personal identification data stored in the ID chip include facial photograph data of the passport owner comparable with the identification photograph printed on the passport body.

4. A passport counterfeit detection system according to claim 1, wherein the personal identification data stored in the ID chip include a full-length photograph data of the passport owner comparable with the whole figure of the passport holder.

5. A passport counterfeit detection system according to claim 1, wherein said ID chip reader is capable of reading out personal identification data from the ID chip embedded in the passport body without coming into contact with said chip.
